# EUROPÄISCHE PATENTSCHRIFT

(11) **EP 0 972 552 B1**
(45) Veröffentlichungstag und Bekanntmachung des Hinweises auf die Patenterteilung: **30.03.2005**
(21) Anmeldenummer: 99890225.8
(22) Anmeldetag: 06.07.1999
(51) Int. Cl.: B01D 24/00, B01D 24/16, B01D 24/18, E04H 4/12

(54) **Einrichtung zur Reinigung von Flüssigkeiten**
Apparatus for fluid purification
Dispositif de purification de fluides

(30) Priorität: 16.07.1998 AT 123098
(43) Veröffentlichungstag der Anmeldung: 19.01.2000
(73) Patentinhaber: Noll, Alexander, 1130 Wien (AT); Minnova Mineralien-Handelsgesellschaft m.b.H., 8501 Lieboch (AT)
(72) Erfinder: Noll, Alexander, 1130 Wien (AT); Klement, Arnold, 8501 Liboch (AT)
(74) Vertreter: Rippel, Andreas, Dipl.-Ing.

(56) Entgegenhaltungen:
- DE-C- 849 885
- GB-A- 1 287 759
- GB-A- 2 276 330

## Beschreibung

Die Erfindung bezieht sich auf eine Einrichtung zur Reinigung von Flüssigkeiten, insbesondere zur Reinigung von Wasser aus Schwimmbecken oder Schwimmteichen, mit einer Pumpe, die die zu reinigende Flüssigkeit durch ein Filterbett drückt, das in einem Filterbehälter angeordnet ist, wobei ein Zufluß und ein Abfluß vorgesehen sind.

Bekannte Einrichtungen dieser Art weisen meist einen geschlossenen Druckbehälter mit Zuund Abfluß und mit einem durchgehenden Filterbett auf, wobei sich die Größe des Druckbehälters nach der Menge der zu reinigenden Flüssigkeit richtet. Weiters ist bei derartigen Einrichtungen die normal zur Strömungsrichtung der zu filternden Flüssigkeit verfügbare Fläche des Filterbetts meist durch die Querschnittsfläche des Druckbehälters determiniert. Dies hat den Nachteil, daß je nach Menge der zu reinigenden Flüssigkeit bzw. erforderlicher Fläche des Filterbetts verschieden große Druckbehälter herangezogen werden oder mehrere geschlossene Druckbehälter parallel geschaltet werden müssen.

In DE 849 885 C 0. Muller) ist ein Kammerfilter beschrieben, bei dem eine im Querschnitt etwa Z-förmige Stützscheibe zwischen den Filterelementen vorgesehen ist, um die einen von den anderen zu trennen und zwischen ihnen Zulauf- oder Verteilungskammern für die zu filternden Stoffe und Austritts- und Sammelkammem für die gefilterten Stoffe zu bilden. Jeder Filterblock ist mit einer geeigneten Filtermasse gefüllt, wobei zylindrische und konzentrische Umschließungen des Filterblocks an den Enden durch ringförmige durchlässige Scheiben verbunden sind.

Weiters ist in GB 1 287 759 A (A. Fourcarde) ein Filter für die Säuberung von Wasser, wie zum Beispiel Wasser in einem Schwimmbad bekannt. Die gleiche Anwendung erfährt auch das in GB 2 276 330 A (Bridge Donald) beschriebene Schwimmbadfilter, welches, so wie der vorher genannte Filter zwar verschiedene Filterbereiche aufweist. Bei diesen Filter kann aber das Volumen und die Fläche des Filterbetts (nachträglich) nicht verändert werden.

Die Erfindung hat es sich zum Ziel gesetzt, eine Einrichtung der eingangs genannten Art zu schaffen, bei der das Volumen und die Fläche des Filterbetts auf einfachste Weise verschieden großen Mengen von zu reinigenden Flüssigkeiten angepaßt werden kann.

Erreicht wird dies dadurch, daß mindestens zwei übereinander stapelbare Filterbehälter angeordnet sind, die einen undurchlässigen Boden aufweisen, wobei jedem Filterbehälter ein Zufluß für die zu reinigende Flüssigkeit zugeordnet ist. Dadurch ergibt sich als besonderer Vorteil, daß die Filterbehälter nicht als Druckbehälter ausgebildet sein müssen.

Bei einer erfindungsgemäßen Einrichtung stellt ein Filterbehälter bereits eine voll funktionsfähige Anlage für die Reinigung einer kleineren Menge Flüssigkeit dar. Sollen größere Flüssigkeitsmengen gereinigt werden, kann bzw. können auf einfache Weise ein oder mehrere Filterbehälter übereinander gestapelt werden.

Weitere Merkmale der gegenständlichen Einrichtung sind aus dem kennzeichnenden Teil der Ansprüche 1 und 2 zu entnehmen.

Die übereinander gestapelten Filterbehälter gemäß Anspruch 1 können in einem Überbehälter angeordnet sein, der einen Abfluß für die gereinigte Flüssigkeit aufweist.

Weitere Merkmale der Erfindung sind in Unteransprüchen gekennzeichnet.

Nachstehend ist die Erfindung anhand zweier Ausführungsbeispiele beschrieben, ohne auf diese Beispiele beschränkt zu sein. Dabei stellt Fig. 1 einen Schnitt durch eine erfindungsgemäße Einrichtung einer ersten Ausführungsform dar; Fig. 2 zeigt einen Schnitt durch eine erfindungsgemäße Einrichtung einer zweiten Ausführungsform entlang der Linie II-II in Fig. 3, und Fig. 3 stellt eine Draufsicht auf eine solche Einrichtung dar.

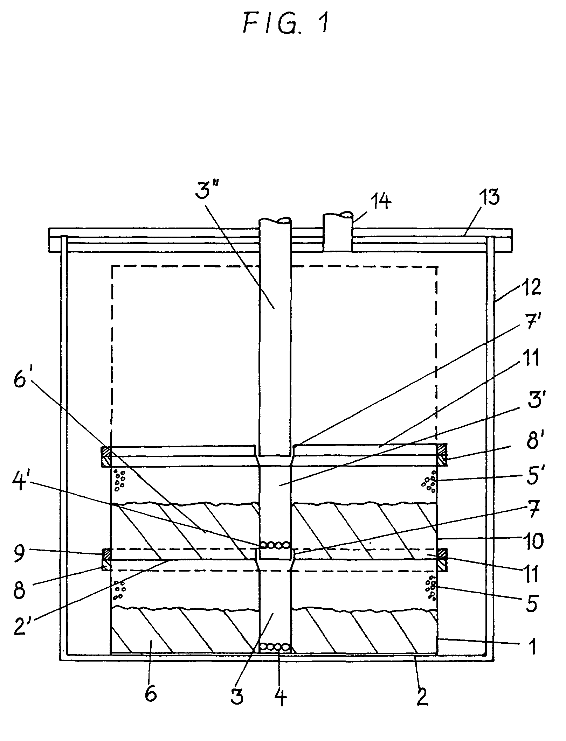

Gemäß der Fig. 1 ist ein Filterbehälter 1 vorgesehen, der mit einem Boden 2 ausgestattet und oben offen ist. Mittig im Behälter 1 ist ein Zuflußrohr 3 angeordnet, das im Bereich des Bodens 2 eine Lochung 4 aufweist. Am äußeren Umfang des Behälters 1 sind Ausflußöffnungen 5 für die nach Durchströmen eines Filterbettes 6 gereinigte Flüssigkeit angeordnet.

Das Rohr 3 ist an seinem oberen Ende mit einer Muffe 7 und der Behälter 1 ist oben mit einem Flansch 8 versehen. Mit diesem Flansch 8 ist ein Flansch 9 eines Zusatzbehälters 10 verschraubt, der dem Behälter 1 weitgehend gleich ist. Für äquivalente Teile sind daher auch die gleichen Bezugszeichen mit einem hochgestellten "Strich" verwendet.

Der Boden 2' des Zusatzbehälters 10 ist im Bereich des Rohres 3 durchbrochen und dieses untere Ende ist in die Muffe 7 eingeschoben, sodaß eine durchgehende Verbindung hergestellt ist. Der Zusatzbehälter 10 ist an seinem oberen Ende mittels eines Flansches 8' mit einem Deckel 11 verschraubt, der im Bereich des Rohres 3' bzw. einer Muffe 7' durchbrochen ist.

Oberhalb des Zusatzbehälters 10 können entsprechend der Größe eines Überbehälters 12 noch weitere Zusatzbehälter angeordnet werden. Je nach Anzahl der eingelegten Zusatzbehälter ist in die oberste Muffe ein Zuflußrohr 3" einzuführen.

Die zu reinigende Flüssigkeit wird durch die Rohre 3", 3' und 3 zugeführt, tritt durch die Lochungen 4' und 4 in die umliegenden Filterbetten 6' und 6 und strömt durch die Ausflußöffnungen 5 und 5' in den Raum zwischen dem Behälter 1 respektive dem Zusatzbehälter 10 und dem Überbehälter 12. Im Deckel 13 des Überbehälters 12 ist ein Ablauf 14 angeordnet, durch den die gereinigte Flüssigkeit die Anordnung verläßt.

Der Deckel 13 ist, wie aus der Fig. 1 ersichtlich, so ausgebildet, daß er auf den Überbehälter 12 paßt und leicht abgenommen werden kann, damit weitere Zusatzbehälter eingesteckt werden können, respektive damit die Filterbetten gereinigt oder ausgetauscht werden können.

Es ist nicht erforderlich, daß die Filterbehälter 1 und 10 flüssigkeitsdicht miteinander verbunden sind, was einen großen Vorteil dieser Ausführungsform der Erfindung darstellt. Auch ist der Überbehälter 12 nicht in jeder Ausführungsform notwendig. Die Filterbehälter 1 und 10 könnten in einer Sammeltasse stehen, von der das gereinigte Wasser in das Schwimmbecken oder den Schwimmteich zurückgeleitet wird. Da die Filterbehälter nicht als Druckbehälter ausgebildet sein müssen, können sie auch offen ausgebildet sein. Es wäre auch möglich, die Einrichtung direkt z. B. in einen Schwimmteich zu stellen, in den das gereinigte Wasser direkt austritt.

Um die horizontale Verteilung der aus dem Zuflußrohr 3 in den Filterbehälter strömenden Flüssigkeit bestmöglich zu erreichen, kann in einer weiteren Ausführungsform (nicht dargestellt) parallel zum Boden des Filterbehälters zwischen der Lochung 4 und den Ausflußöffnungen 5 ein Rost angeordnet sein, welcher als Auflage für das Filterbett dient.

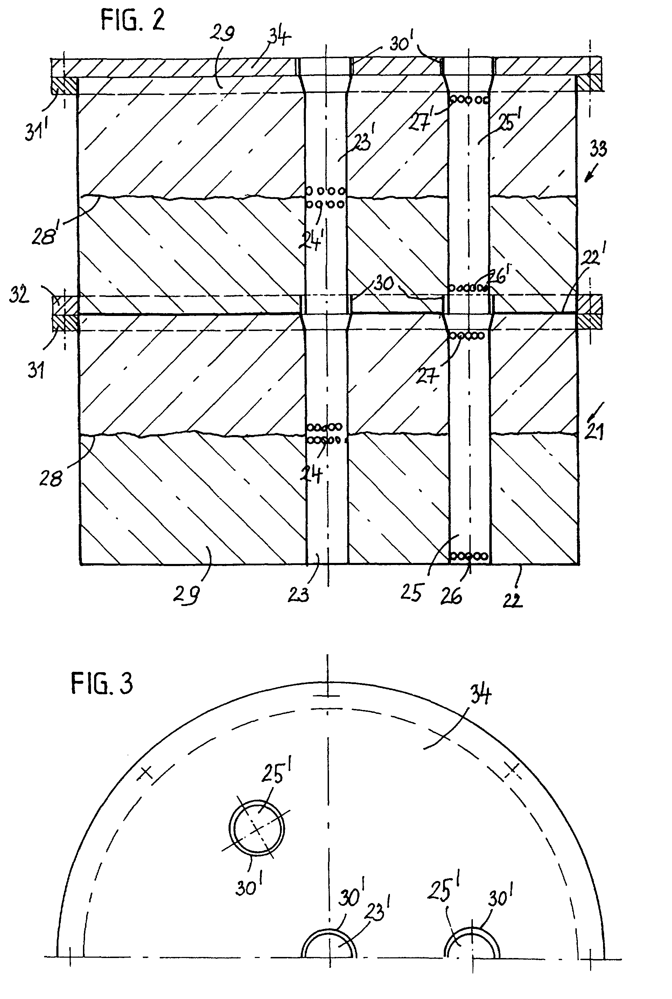

Gemäß den Fig. 2 und 3 ist ein Behälter 21 vorgesehen, der mit einem Boden 22 ausgestattet ist. Mittig im Behälter 21 ist ein Zuflußrohr 23 angeordnet, das in der Mitte eine Lochung 24 aufweist.

Um das Zuflußrohr 23 herum sind beim Ausführungsbeispiel drei Abflußrohre 25 angeordnet. Jedes dieser Abflußrohre 25 besitzt nahe dem Boden 22 eine Lochung 26 und nahe dem oberen Ende des Behälters 21 eine Lochung 27. Quer zur Achse der Rohre 23, 25 ist der Behälter 21 durch eine Schicht 28, die sowohl flüssigkeitsdurchlässig als auch flüssigkeitsundurchlässig ausgebildet sein kann, geteilt. Oberhalb und unterhalb dieser Schicht 28 befindet sich ein Filterbett 29.

Die Rohre 23, 25 sind an ihrem oberen Ende mit Muffen 30 und der Behälter 21 ist oben mit einem Flansch 31 versehen. Mit diesem Flansch 31 ist der Flansch 32 eines Zusatzbehälters 33 verschraubt, der dem Behälter 21 weitgehend gleich ist. Für äquivalente Teile sind daher auch die gleichen Bezugszeichen mit einem hochgestellten "Strich" verwendet.

Der Boden 22' des Zusatzbehälters 33 ist im Bereich der Rohre 23' und 25' durchbrochen und diese unteren Enden sind in die Muffen 30 eingeschoben, sodaß eine durchgehende Verbindung hergestellt ist. Der Zusatzbehälter 33 ist an seinem oberen Ende mittels seines Flansches 31' mit einem Deckel 34 verschraubt, der im Bereich der Rohre 23', 25' bzw. der Muffen 30' durchbrochen ist.

Die zu reinigende Flüssigkeit wird durch die Rohre 23' und 23 zugeführt, tritt durch die Lochungen 24' und 24 in die umliegenden Filterbetten 29, und zwar oberhalb und unterhalb der Schichten 28, durchströmt diese Filterbetten und strömt durch die Bohrungen 26, 27, 26' und 27' in die Rohre 25 bzw. 25' und von dort nach außen. Die Rohre 25' sind zu einem einzelnen Abflußrohr (nicht dargestellt) vereinigt.

## Patentansprüche

1. Einrichtung zur Reinigung von Flüssigkeiten, insbesondere zur Reinigung von Wasser aus Schwimmbecken oder Teichen, mit einer Pumpe, die die zu reinigende Flüssigkeit durch ein Filterbett drückt, das in einem Filterbehälter angeordnet ist,
wobei ein Zufluß für die zu reinigende Flüssigkeit vorgesehen ist und ein Abfluß für die gereinigte Flüssigkeit angeordnet ist,
**dadurch gekennzeichnet daß**
mindestens zwei übereinander stapelbare Filterbehälter (1,10) - ein Grundbehälter (1) und mindestens ein Zusatzbehälter (10) - angeordnet sind,
wobei jeder Filterbehälter (1,10) einen undurchlässigen Boden (2,2') aufweißt und
wobei jedem Filterbehälter (1,10) ein Zufluß angeordnet ist, der durch ein etwa mittig angeordnetes, mit Lochungen (4,4') aufweisendes Rohr (3,3') gebildet ist,
wobei die Lochungen (4,4') im Bereich des Bodens (2,2') des jeweiligen Filterbehälters (1,10) angeordnet sind und
die Rohre (3,3') der Filterbehälter (1,10) miteinander verbindbar sind,
sowie am Umfang und in dem oberen Bereich der jeweiligen Filterbehälter (1,10) Ausflußöffnungen (5,5') für die nach Durchströmen des jeweiligen Filterbettes (6,6') gereinigte Flüssigkeit angeordnet sind.

2. Einrichtung zur Reinigung von Flüssigkeiten, insbesondere zur Reinigung von Wasser aus Schwimmbecken oder Teichen, mit einer Pumpe, die die zu reinigende Flüssigkeit durch ein Filterbett drückt, das in einem Filterbehälter angeordnet ist,
wobei ein Zufluß für die zu reinigende Flüssigkeit vorgesehen ist und ein Abfluß für die gereinigte Flüssigkeit angeordnet ist angeordnet ist,
**dadurch gekennzeichnet daß**
mindestens zwei übereinander stapelbare Filterbehälter (21,33) - ein Grundbehälter (21) und mindestens ein Zusatzbehälter (33) - angeordnet sind,
wobei jeder Filterbehälter (21,33) einen undurchlässigen Boden (22,22') aufweißt und
wobei jedem Filterbehälter (21,33)) ein Zufluß angeordnet ist, der durch ein etwa mittig angeordnetes, mit Lochungen (24,24') aufweisendes Rohr (23,23') gebildet ist,
wobei die Lochungen (24,24') im der Mitte des Rohres (23,23') angeordnet sind,
die Rohre (23,23') der Filterbehälter (21,33) miteinander verbindbar sind,
um jedes Rohr (23,23') Abflußrohre (25,25') mit Lochungen (26,27,26',27') für die nach Durchströmen des Filterbettes (29) gereinigte Flüssigkeit angeordnet sind,
wobei die Lochungen (26,27,26',27') der Abflußrohre (25,25') im Bereich der Enden des jeweiligen Filterbehälters (21,33) angeordnet sind und
die jeweiligen Abflußrohre (25,25') der Filterbehälter (21,33) miteinander verbindbar sind.

3. Einrichtung nach Anspruch 1, **dadurch gekennzeichnet, daß** die übereinander gestapelten Filterbehälter (1,10) in einem Überbehälter (12) angeordnet sind, der einen Abfluß (14) für die gereinigte Flüssigkeit aufweist.

4. Einrichtung nach Anspruch 2, **dadurch gekennzeichnet, daß** ein auf den Zusatzbehälter (33) passender lösbare Deckel (34) vorgesehen ist, und die dem Boden (22) abgekehrten Anschlussenden der Rohre (23,25) des Grundbehälters (21) zum Verbinden mit Enden von m Zusatzbehälter (33) angeordneten Rohren (23',25') ausgebildet sind, und die diesen Enden gegenüberliegenden Anschlussenden der Rohre (23',25') im Zusatzbehälter (33) zum Verbinden mit Enden von in weiteren Zusatzbehältern angeordneten Rohren oder im Deckel (34) angeordneten Öffnungen ausgebildet sind.

5. Einrichtung nach Anspruch 4, **dadurch gekennzeichnet, daß** der Innenraum sowohl des Grundbehälters (21) als auch der (des) Zusatzbehälter(s) (33) quer zur Achse der Rohre (23,25,23',25'), durch Einlegen einer Schicht (28), die sowohl flüssigkeitsdurchlässig als auch flüssigkeitsundurchlässig ausgebildet sein kann, geteilt ist, und die Lochungen (24,24') des Zuflußrohres (23,23') im Bereich dieser Schicht (28) angeordnet sind.

6. Einrichtung nach Anspruch 4 oder 5, **dadurch gekennzeichnet, daß** drei gleichmäßig verteilte Abflußrohre (25,25') angeordnet sind.

7. Einrichtung nach einem der Ansprüche 4 bis 6, **dadurch gekennzeichnet, daß** die einzelnen Zusatzbehälter (33) mit Böden (22') versehen sind, die durch die Rohre (23',25') durchbrochen sind.

## Claims

1. A device for cleaning liquids, particularly for cleaning the water of swimming pools or ponds, with a pump that presses the liquid to be cleaned through a filter bed that is arranged in a filter receptacle, wherein an inlet for the liquid to be cleaned and an outlet for the cleaned liquid are provided,
**characterized in that**
at least two filter receptacles (1, 10) are provided--one base receptacle (1) and at least one auxiliary receptacle (10)--that can be stacked on top of one another,
wherein each filter receptacle (1, 10) contains an impermeable bottom (2, 2'),
wherein an inlet arranged on each filter receptacle (1, 10) is realized in the form of a pipe (3, 3') that is approximately arranged centrally and provided with perforations (4, 4'), with the perforations (4, 4 ') being arranged in the region of the bottom (2, 2') of the respective filter receptacle (1, 10) and the pipes (3, 3') of the filter receptacles (1, 10) being interconnectable,
and wherein outlet openings (5, 5') for the liquid that is cleaned after flowing through the respective filter bed (6, 6') are peripherally arranged in the upper region of the respective filter receptacle (1, 10).

2. A device for cleaning liquids, particularly for cleaning the water of swimming pools or ponds, with a pump that presses the liquid to be cleaned through a filter bed that is arranged in a filter receptacle, wherein an inlet for the liquid to be cleaned and an outlet for the cleaned liquid are provided,
**characterized in that**
at least two filter receptacles (21, 33) are provided--one base receptacle (21) and at least one auxiliary receptacle (33)--that can be stacked on top of one another,
wherein each filter receptacle (21, 33) contains an impermeable bottom (22, 22'),
wherein an inlet arranged on each filter receptacle (21, 33) is realized in the form of a pipe (23, 23') that is approximately arranged centrally and provided with perforations (24, 24'),
with the perforations (24, 24') being arranged in the center of the pipe (23, 23')
and the pipes (23, 23') of the filter receptacles (21, 33) being interconnectable,
wherein outlet pipes (25, 25') with perforations (26, 27, 26', 27') for the liquid that is cleaned after flowing through the filter bed (29) are arranged around each pipe (23, 23'), and
wherein the perforations (26, 27, 26', 27') of the outlet pipes (25, 25') are arranged in the end regions of the respective filter receptacle (21, 33)
and the respective outlet pipes (25, 25') of the filter receptacles (21, 33) can be interconnected.

3. The device according to Claim 1, **characterized in that** the filter receptacles (1, 10) are stacked on top of one another in a covering container (12) that is provided with an outlet (14) for the cleaned liquid.

4. The device according to Claim 2, **characterized in that** a removable cover (34) is provided that fits on the auxiliary container (33), **in that** the connecting ends of the pipes (23, 25) of the base receptacle (21) that are situated opposite of the bottom (22) are designed for being connected to the ends of pipes (23', 25') arranged in the auxiliary receptacle (33), and **in that** the connecting ends of the pipes (23', 25') in the auxiliary receptacle (33) that are situated opposite of these ends are designed for being connected to the ends of pipes arranged in additional auxiliary receptacles or openings arranged in the cover (34).

5. The device according to Claim 4, **characterized in that** the interior of the base receptacle (21) as well as of the auxiliary receptacle(s) (33) is divided transverse to the axis of the pipes (23, 25, 23', 25') by inserting a layer (28) that may be realized in a permeable or impermeable fashion, and **in that** the perforations (24, 24') of the inlet pipe (23, 23') are arranged in the region of this layer (28).

6. The device according to Claim 4 or 5, **characterized in that** three outlet pipes (25,25') are arranged in a uniformly distributed fashion.

7. The device according to one of Claims 4-6, **characterized in that** the individual auxiliary receptacles (33) are provided with bottoms (22') that are penetrated by the pipes (23', 25').

## Revendications

1. Dispositif de purification de liquides, notamment de purification d'eau de bassins ou d'étangs de natation, comprenant une pompe qui pousse le liquide à purifier à travers un lit de filtrage qui est disposé dans une cuve de filtrage, un afflux étant prévu pour le liquide à purifier et un écoulement pour le liquide purifié étant installé,
**caractérisé en ce que**
sont prévues au moins deux cuves de filtrage (1, 10) - une cuve de base (1) et au moins une cuve supplémentaire (10)- empilables l'une sur l'autre,
chaque cuve de filtrage (1, 10) présentant un fond imperméable (2, 2') et
étant prévu pour chaque cuve de filtrage (1, 10) un afflux qui est constitué par un tuyau (3, 3') disposé approximativement au centre et présentant des perforations (4, 4'),
les perforations (4, 4') étant pratiquées au niveau du fond (2, 2') de la cuve de filtrage respective (1, 10) et
les tuyaux (3, 3') des cuves de filtrage (1, 10) pouvant être reliés les uns aux autres,
étant également disposés, sur la circonférence et dans la zone supérieure des cuves de filtrage respectives (1, 10), des orifices d'écoulement (5, 5') pour le liquide purifié après son passage à travers le lit de filtrage respectif (6, 6').

2. Dispositif de purification de liquides, notamment de purification d'eau de bassins ou d'étangs de natation, comprenant une pompe qui pousse le liquide à purifier à travers un lit de filtrage qui est disposé dans une cuve de filtrage, un afflux étant prévu pour le liquide à purifier et un écoulement pour le liquide purifié étant installé,
**caractérisé en ce que**
sont prévues au moins deux cuves de filtrage (21, 33) - une cuve de base (21) et au moins une cuve supplémentaire (33)- empilables l'une sur l'autre,
chaque cuve de filtrage (21, 33) présentant un fond imperméable (22, 22') et
étant prévu pour chaque cuve de filtrage (21, 33) un afflux qui est constitué par un tuyau (23, 23') disposé approximativement au centre et présentant des perforations (24, 24'),
les perforations (24, 24') étant pratiquées au milieu du tuyau (23, 23'),
les tuyaux (23, 23') des cuves de filtrage (21, 33) pouvant être reliés les uns aux autres,
étant disposés, autour de chaque tuyau (23, 23') des tuyaux d'écoulement (25, 25') présentant des perforations (26, 27, 26', 27') pour le liquide purifié après son passage à travers le lit de filtrage (29),
les perforations (26, 27, 26', 27') des tuyaux d'écoulement (25, 25') étant pratiquées au niveau des extrémités de la cuve de filtrage respective (21, 33),
les tuyaux d'écoulement respectifs (25, 25') des cuves de filtrage (21, 33) pouvant être reliés les uns aux autres.

3. Dispositif selon la revendication 1, **caractérisé en ce que** les cuves de filtrage empilées les unes sur les autres (1, 10) sont disposées dans une sur-cuve (12) qui présente un écoulement (14) pour le liquide purifié.

4. Dispositif selon la revendication 2, **caractérisé en ce qu'**un couvercle amovible (34) adapté à la cuve supplémentaire (33) est prévu et que les extrémités de raccordement des tuyaux (23, 25) détournées du fond (22) de la cuve de base (21) sont conçues pour se rattacher aux extrémités de tuyaux (23', 25') disposés dans la cuve supplémentaire (33) et que les extrémités de raccordement des tuyaux (23', 25') faisant face à ces extrémités dans la cuve supplémentaire (33) sont conçues pour se rattacher aux extrémités de tuyaux disposés dans d'autres cuves supplémentaires ou à des orifices pratiqués dans le couvercle (34).

5. Dispositif selon la revendication 4, **caractérisé en ce que** l'espace intérieur (21) aussi bien de la cuve de base (21) que de la(des) cuve(s) supplémentaire(s) (33) est divisé transversalement à l'axe des tuyaux (23, 25, 23', 25') en y insérant une couche (28) qui peut être réalisée aussi bien de manière à être perméable au liquide qu'imperméable au liquide et que les perforations (24, 24') du tuyau d'afflux (23, 23') sont disposées au niveau de cette couche (28).

6. Dispositif selon la revendication 4 ou 5, **caractérisé en ce que** sont installés trois tuyaux d'écoulement (25, 25') répartis régulièrement.

7. Dispositif selon l'une quelconque des revendications 4 à 6, **caractérisé en ce que** les différentes cuves supplémentaires (33) sont pourvues de fonds (22') qui sont transpercés par les tuyaux (23', 25').
